Europäisches Patentamt

European Patent Office

Office européen des brevets

(11) Veröffentlichungsnummer: **0 375 992 B1**

(12) **EUROPÄISCHE PATENTSCHRIFT**

(45) Veröffentlichungstag der Patentschrift: **26.01.94**

(21) Anmeldenummer: **89122241.6**

(22) Anmeldetag: **02.12.89**

(51) Int. Cl.5: **C08G 59/50**, C07D 233/16, C07D 233/24

(54) **Verfahren zur Herstellung von Rohren aus Verbundwerkstoffen auf Basis von Epoxidharzen und Bis-[1(2'aminoethyl)-1,3-diaza-cyclopenten-2-yl-2]-heptan-1,7.**

(30) Priorität: **27.12.88 DE 3843985**

(43) Veröffentlichungstag der Anmeldung:
**04.07.90 Patentblatt 90/27**

(45) Bekanntmachung des Hinweises auf die Patenterteilung:
**26.01.94 Patentblatt 94/04**

(84) Benannte Vertragsstaaten:
**AT BE CH DE ES FR GB IT LI NL SE**

(56) Entgegenhaltungen:
**FR-A- 1 216 330**

**PATENT ABSTRACTS OF JAPAN, Band 5, Nr. 20 (C-42)[692], 6. Februar 1981; & JP-A-55 147 523**

(73) Patentinhaber: **Witco GmbH**
**Ernst-Schering-Strasse 14,**
**Postfach 1620**
**D-59180 Bergkamen(DE)**

(72) Erfinder: **Burba, Christian, Dr. Dipl.-Chem.**
**Gerhart-Hauptmann-Strasse 9**
**D-4715 Herbern(DE)**
Erfinder: **Mrotzek, Werner, Dr. Dipl.-Ing.**
**Dresdener Strasse 24**
**D-4600 Dortmund 1(DE)**
Erfinder: **Franz, Herbert**
**Albert-Schweitzer-Strasse 41**
**D-4700 Hamm 1(DE)**
Erfinder: **Krotzek, Alwin**
**Nathstrasse 17**
**D-4712 Werne(DE)**

**Beschreibung**

Die Erfindung betrifft ein Verfahren zur Herstellung von Rohren aus Verbundwerkstoffen für Brauch- und Trinkwasser, hergestellt nach dem Wickelverfahren aus üblichen Einlagematerialien mit Bindemitteln auf Basis von Epoxidharzen und Bis{1(2′aminoethyl)-1,3-diaza-cyclopenten-2-yl-2}heptan-1,7 und/oder Bis{1-(2′aminoethyl)-1,3-diazacyclopenten2-yl-2}oktan-1,8.

Die heute noch überwiegend verwendeten Rohre aus Metall weisen hinsichtlich ihrer Eigenschaften eine Reihe von Mängeln auf, wie insbesondere hohes Gewicht und Korrosionsanfälligkeit. Jährlich sind immense Summen aufzuwenden für die Instandhaltung, Ausbesserung oder den Austausch von wasserführenden Rohren im Niedertemperaturbereich (Trinkwasser, Brauchwasser), insbesondere aber dort, wo Heißwasser oder Dampf zu- oder abgeleitet werden muß.

Es sind daher seit geraumer Zeit verstärkte Anstrengungen unternommen worden, die positiven Eigenschafen von faserverstärkten Kunstharzen für dieses Gebiet nutzbar zu machen, wie geringes Gewicht, gute Chemikalienbeständigkeit - unter Umständen auch gegen Lösungsmittel -, Anpassungsfähigkeit hinsichtlich konstruktionstechnischer Anforderungen, wirtschaftliche Herstellung gegenüber anderen korrosionsbeständigen Werkstoffen wie Glas, Metall, Email, geringer Wartungs- u. Instandhaltungsaufwand.

Die Bestrebungen, die positiven Eigenschaften von faserverstärkten Kunstharzen auch für Rohre, welche für die Förderung von Trink- und Brauchwasser bei höheren Temperaturen eingesetzt werden sollen, wurden daher weiter intensiviert.

Dabei zeigte sich, daß der kommerziellen Verwertung im Trinkwasserbereich neben einigen verarbeitungstechnischen Problemen, insbesondere die physiologische Bedenklichkeit der auf dem Wickelsektor üblichen Härtungsmittel entgegensteht.

Bei der Förderung von heißem Wasser oder Dampf bis ca. 120 °C war nach relativ kurzer Zeit eine Verminderung des thermischen Eigenschaftsniveaus, z. B. (Torsionsschwingversuch DIN 53 445), zu verzeichnen.

Durch die Verminderung des thermischen Eigenschaftsniveaus werden die konstruktionstechnischen Eigenschaften der faserverstärkten Verbundwerkstoffe zum Teil soweit negativ beeinflußt, daß sie für die obengenannten Anwendungen nicht eingesetzt werden können.

Aus der Vielzahl der zur Verfügung stehenden Härtungsmittel konnte bisher nur das 1-Amino-3,3,5 Trimethyl-5-aminomethyl-cyclohexan (Isophorondiamin) die gestellten physikalischen Eigenschaftsanforderungen erfüllen.

Isophorondiamin ist aber ein relativ teurer Härter, welcher darüber hinaus nicht immer im erforderlichen Maße zur Verfügung steht und auch verarbeitungstechnisch einige Nachteile aufweist. Hier ist insbesondere hinzuweisen auf: kurze Verarbeitungszeit, hohe Härtungstemperatur, physiologische Probleme.

Es hat daher in der Vergangenheit nicht an Versuchen gemangelt, Alternativhärter zu entwickeln, welche dem Isophorondiamin vergleichbare Eigenschaften in den gehärteten Harzen erzeugen und geringere physiologische Probleme verursachen.

Die bislang vorgeschlagenen Imidazoline auf Basis von Umsetzungsprodukten aus monomeren Fettsäuren mit 2 bis 18 Kohlenstoffatomen, insbesondere mit 2 bis 5 Kohlenstoffatomen, brachten zwar eine physiologische Unbedenklichkeit, jedoch keine ausreichende Beständigkeit gegenüber heißem Wasser, was aus den starken Abfall der HDT-Werte (Heat distortion temperature) nach Lagerung im kochenden Wasser ablesbar ist.

Die Erfahrungswerte aus der Praxis zeigten, daß nicht nur die Imidazoline aus kurzkettigen Monocarbonsäuren, sondern überraschenderweise auch die Imidazoline aus den hydrophoben langkettigen monomeren und dimeren Fettsäuren größere Mengen an Wasser aufzunehmen vermögen. Entsprechend war der Abfall der HDT-Werte. Bei cycloaliphatischen Diaminen, wie Isophorondiamin war dies nicht der Fall (vgl. Bilder 1 und 2).

Nach allgemeiner Überzeugung waren Imidazoline als Härter für Epoxidharze daher nicht geeignet für Produkte, welche später einer Wasserbelastung ausgesetzt waren.

Überraschenderweise wurde nun gefunden, daß das Bis{1(2′aminoethyl)-1,3-diaza-cyclopenten-2-yl-2}heptan-1,7 und das Bis{1(2′aminoethyl)-1,3-diaza-cyclopenten-2-yl-2}oktan-1,8 den gehärteten Epoxidharzen auf Basis von Bisphenol A und Bisphenol F sowohl physiologische Unbedenklichkeit als auch Beständigkeit gegenüber einer Dauerbelastung von heißem Wasser oder Heißdampf bis ca. 120 °C verleiht, darüberhinaus sind auch die verarbeitungstechnischen Eigenschaften verbessert, insbesondere konnte die offene Zeit auf praxisgerechte Zeiten verlängert werden.

Gegenstand der Erfindung ist daher ein Verfahren zur Herstellung von Rohren aus Verbundwerkstoff für Brauch- und Trinkwasser, hergestellt nach dem Wickelverfahren mit Bindemitteln auf Basis von Epoxidharzen, welche im Durchschnitt mehr als eine Epoxidgruppe im Molekül enthalten und Härtungsmitteln für die Epoxidharze unter Mitverwendung von üblichen Hilfs- und Zusatzstoffen, welches dadurch gekennzeichnet ist, daß als Bindemittel härtbare Mischungen verwendet werden, welche bestehen aus:

A) mindestens einem flüssigen Epoxidharz mit Epoxidwerten von 0,4 - 0,6 und

B) Bis{1(2′aminoethyl)-1,3-diaza-cyclopenten-2-yl-2}heptan-1,7 und/oder Bis{1(2′aminoethyl)-1,3-diaza-cyclopenten-2-yl-2}oktan-1,8 und gegebenenfalls

C) üblichen Füll- und/oder Versteifungsmaterialien, Pigmenten, Farbstoffen, Beschleunigern, Benetz- und Verlaufsmitteln, reaktiven Verdünnern.

Ein weiterer Gegenstand der Erfindung ist ein Verfahren, welches dadurch gekennzeichnet ist, daß als flüssiges Epoxidharz gemäß A) Bisphenol-A und/oder Bisphenol-F mit Epoxidwerten zwischen 0,5 bis 0,55 verwendet wird.

Die erfindungsgemäß mitverwendeten Epoxidharze sind Glycidylether mit zwei oder mehr Epoxygruppen pro Molekül wie vorzugsweise die Glycidylether auf Basis von ein- oder mehrwertigen Phenolen. Erfindungsgemäß bevorzugt werden Glycidylether von 2,2-Bis(4-hydroxyphenyl)-propan (Bisphenol A) mit Epoxidwerten von 0,2 - 0,6, insbesondere die bei Raumtemperatur flüssigen Verbindungen mit Epoxidwerten um 0,45 bis 0,55. Daneben haben sich auch die Glycidylether auf Basis von Bisphenol F und die Novolake als vorteilhaft erwiesen.

Das Bis{1(2′aminoethyl)2-en-1,3-diaza-cyclopenten-2-yl-2}heptan-1,7 und/oder das Bis{1-(2′aminoethyl)-1,3-diazacyclopenten-2-yl-2}oktan-1,8 werden hergestellt durch Umsetzung von Azelainsäure bzw. Sebazinsäure mit Diethylentriamin im Molverhältnis von mindestens 1 : 2. Sie werden in der Regel in Mengen von 10 - 20 Gew.-Teilen, vorzugsweise 15 Gew.-Teilen pro 100 Gew.-Teile Epoxidharz mitverwendet.

Falls gewünscht, können zur Modifizierung der Verarbeitungs- und Härtungseigenschaften auch die auf diesem Gebiet üblichen und allgemein bekannten Modifizierungsmittel wie übliche Füll- und/oder Versteifungsmaterialien, Pigmente, Farbstoffe, Beschleuniger, Benetz- und Verlaufsmittel, reaktive Verdünner, Härtungsmittel mitverwendet werden. Als Verstärkungsmaterialien werden die üblichen Glasfasern bevorzugt eingesetzt.

Als übliche Härtungsmittel werden insbesondere die cycloaliphatischen Amine wie beispielsweise Isophorondiamin, 1,2-Diaminocyclohexan, 4,4′-Diamino-3,3′-dimethyl-dicylohexylmethan mitverwendet.

Als erfindungsgemäß mitverwendbare Glycidylether werden solche auf Basis von alicyclischen Alkoholen wie 1,4-Dimethylolcyclohexan und aliphatischen Alkoholen, insbesondere 2- oder 3-wertigen aliphatischen Alkoholen mit 4 - 8 C-Atomen wie Butandiole, Hexandiole, Oktandiole, Glycerin, welche durch Addition von Ethylenoxid oder Propylenoxid verlängert sein können, bevorzugt.

Die Menge der reaktiven Verdünner liegt in der Regel zwischen 5 - 10, vorzugsweise 6 - 8 Gew.-%, bezogen auf Epoxidharz gemäß A).

Beschreibung des Verfahrens

Aufgrund der relativ langen Tecam-Zeit der erfindungsgemäß mitverwendeten Härter ist es durch gezielte Zugabe von den auf diesem Gebiet üblichen Beschleunigern möglich, Topfzeiten maßgeschneidert einzustellen.

Als Beschleuniger können beispielsweise tertiäre Amine, wie solche auf Basis von Phenol-Formaldehyd-Kondensationsprodukten eingesetzt werden.

Die vergleichsweise hohen Viskositäten der erfindungsgemäß mitverwendeten Härter ermöglichen es, die Verarbeitungsviskosität ebenfalls individuell den Forderungen der Praxis anzupassen. Bei heizbaren Tränkbädern und Wickelkernen kann dies einfach durch eine entsprechende Temperaturwahl erfolgen, bei anderen nichtheizbaren Kernen durch Mitverwendung von reaktiven Verdünnern. Dadurch ist eine stufenlose Einstellung möglich, wodurch eine optimale Benetzung des Verstärkungsmaterials erzielt werden kann, ohne daß das Bindemittel während des Wickelvorganges, d. h. beim Aufbau des Wickelkörpers, ausgequetscht wird und abtropft. Neben der Reduzierung von Bindemittelverlusten kann auch der Aufbau des Wickelkörpers gleichmäßiger erfolgen.

Bei der Rohrfertigung nach dem Wickelverfahren werden mit Bindemittel versehene Endlosfasern kontinuierlich auf einem rotierenden, den Rohrinnendurchmesser bestimmenden Kern abgelegt. Der Aufbau der Rohrwandung erfolgt dabei schichtweise, indem die imprägnierten Fasern zunächst, wie bei einer Spule, über die gesamte Rohrlänge nebeneinander abgelegt werden, ehe die nächste Lage in gleicher Weise darüber gewickelt wird. Die Dicke der Wicklung und der Ablegewinkel der Fasern senkrecht zur Rohrachse ist abhängig von dem späteren Rohrinnendruck, wobei jedoch aus fertigungstechnischen Gründen zwei aufeinanderfolgende Lagen stets einen leicht unterschiedlichen Wickelwinkel aufweisen. Nach Erreichung der gewünschten Rohrwandungsdicke wird der Wickelkörper nebst Kern zur Aushärtung des noch flüssigen Bindemittels einer Wärmebehandlung unterzogen und anschließend vom Kern entformt.

Zur Herstellung qualitativ hochwertiger Rohre im Wickelverfahren ist es wichtig, daß das Bindemittel die Verstärkungsfasern möglichst vollständig benetzt, ohne daß infolge zu geringer Tränkviskosität jedoch ein Abtropfen des Bindemittels von dem im Aufbau befindlichen Wickelkörper eintritt. Weiterhin muß das Harzsystem eine ausreichend lange Gelierungszeit aufweisen, damit die eine Wickellage nicht schon ausreagiert ist, ehe die noch folgende Lage aufgetragen ist, was eine nachteilige Schwächung des gesamten Wickelverbundes zur Folge haben würde. Außerdem erschwert eine kurze Gelierungszeit des Harzsystems den gesamten Fertigungsprozeß, da sie die Verwendung von einfach zu handhabenden Tränkbädern für den Bindemittelauftrag auf die Verstärkungsfasern ausschließt und stattdessen eine kontinuierliche Bindemitteldosierung erforderlich macht, mit der jedoch auch die Gefahr von Dosier- und Mischfehlern erheblich steigt. Da aber andererseits der Wickelkörper nach der Fertigstellung unter Temperatureinwirkung möglichst schnell ausreagieren soll, sollte die Gelierungszeit der Dauer des jeweiligen Wickelvorganges möglichst optimal anpaßbar sein.

Wie Tabelle 1 zeigt, liegt die Gelierungszeit (ausgedrückt im Tecam-Wert) des Bindemittelsystems mit dem Härter nach Beispiel 1 deutlich oberhalb des Vergleichswertes des zur Zeit bevorzugt auf dem Rohrwickelsektor verwendeten Bindemittelsystems mit einem Härter entsprechend Beispiel 3. Auch die Werte aus dem Zugversuch und das Eigenschaftsniveau bei Temperaturbeanspruchung von Beispiel 1 übertreffen bei einer Härtung bei den bevorzugten Bedingungen von 2 h bei 120 °C die Daten von Beispiel 3 recht deutlich, wobei insbesondere die hohe Übergangstemperatur des erstgenannten Beispiels Erwähnung verdient (184 °C gegen 158 °C).

Von besonderer Bedeutung ist in diesem Zusammenhang die Veränderung des Eigenschaftsniveaus der Bindemittelsysteme bei gleichmäßiger Temperatur und Medieneinwirkung, wie sie aus Tabelle 2 anhand der Veränderung der HDT-Werte nach unterschiedlich langer Lagerung in kochendem Wasser deutlich wird.

Wie Tabelle 2 für Beispiel 4.1 exemplarisch zeigt, sinkt der HDT-Wert der meisten mit Imidazolinen gehärteten Bindemittelsysteme bei dieser Beanspruchung bereits nach siebentägiger Temperatur- und Wassereinwirkung zum Teil auf die Hälfte des Ausgangswertes. Bei den erfindungsgemäß mitverwendeten Imidazolinen nach Beispiel 1 und 2 ist demgegenüber der Rückgang des HDT nach Einwirkung von kochendem Wasser sehr begrenzt.

Beispiel 1

24,72 kg Diethylentriamin und 0,24 kg p-Toluolsulfonsäure-Monohydrat werden vorgelegt und auf 50 °C erwärmt. Unter kräftigem Rühren gibt man portionsweise 22,56 kg Azelainsäure so zu, daß eine homogene Mischung entsteht.

Nach Beendigung der Zugabe wird aufgeheizt; ab ca. 160 °C beginnt die Kondensation. Die Temperatur wird langsam auf 240 °C erhöht und bei dieser Temperatur gehalten, bis kein Destillat mehr übergeht. Anschließend wird langsam Vakuum bis zu ca. 600 mbar angelegt, wobei vermieden wird, daß noch nicht umgesetztes Diethylentriamin abdestilliert.

Das Reaktionsgemisch wird solange bei 240 °C/ca. 600 mbar gehalten, bis die errechnete Kondensatmenge erreicht ist und der Imidazolingehalt - ermittelt durch Infrarotspektroskopie - mehr als 80 % beträgt.

Das filtrierte Produkt hat folgende Kennzahlen:

| Aminzahl: | 550 - 590 |
| Viskosität: | 5 - 15 Pa.s/25 °C |
| Imidazolingehalt: | 80 % |

Beispiel 2

206 g (2 Mol) Diethylentriamin und 2 g p-Toluolsulfonsäure werden vorgelegt und auf 50 °C erwärmt. Unter kräftigem Rühren gibt man portionsweise 202 g (1 Mol) Sebazinsäure so zu, daß eine homogene Mischung entsteht.

Nach Beendigung der Zugabe wird aufgeheizt, ab ca. 160 °C beginnt die Kondensation. Die Temperatur wird langsam auf 240 °C erhöht und bei dieser Temperatur gehalten, bis kein Destillat mehr übergeht. Anschließend wird langsam Vakuum bis zu 120 mbar angelegt, wobei vermieden wird, daß noch nicht umgesetztes Diethylentriamin abdestilliert.

4

Das Reaktionsgemisch wird so lange bei 240 °C/120 mbar gehalten, bis der Imidazolingehalt - ermittelt durch Infrarotspektroskopie - ca. 80 % beträgt.

Das filtrierte Produkt hat folgende Kennzahlen:

| Aminzahl: | 430 |
|---|---|
| Viskosität: | 67,7 Pa.s/25 °C |
| Imidazolingehalt: | 79 % |

Beispiel 3 (Vergleich)

| Handelsübliches Isophorondiamin | |
|---|---|
| Aminzahl: | 660 |
| Viskosität: | 15 mPa.s/25 °C |

Beispiel 4 (Vergleich)

Wie Beispiel 1, jedoch kommt anstelle von Azelainsäure die äquivalente Menge 4.1 Propionsäure, 4.2 Tallölfettsäure, 4.3 Dimere Fettsäure (96 % Dimeranteil) zum Einsatz. Das Produkt hat folgende Kennzahlen:

| 4.1 | Aminzahl | 700 |
|---|---|---|
| | Viskosität | 20 mPa.s/25 °C |
| | Imidazolingehalt | 80 % |
| 4.2 | Aminzahl | 260 |
| | Viskosität | 200 mPa.s/25 °C |
| | Imidazolingehalt | 91 % |
| 4.3 | Aminzahl | 300 |
| | Viskosität | 5000 mPa.s/25 °C |
| | Imidazolingehalt | 91 % |

Prüfungsdurchführung

Zur Ermittlung des mechanischen Eigenschaftsniveaus werden bei Beispiel 1, 2 und 4 15 Gew.-Teile und bei Beispiel 3 25 Gew.-Teile Härter mit 100 Gew.-Teilen eines niedrigviskosen Epoxidharzes auf Bisphenol-A-Basis (Epoxid-Wert 0,54) vermischt und in einem Stahlwerkzeug in 2 Stunden bei 120 °C zu 4 mm dicken ebenen Formteilen ausgehärtet. Aus diesen Formteilen werden dann durch Sägen bzw. Fräsen Probekörper entnommen, an denen unter Einhaltung der jeweiligen Prüfnormen die in nachstehender Tabelle 1 aufgeführten Eigenschaftswerte ermittelt sind.

Die bei den verschiedenen Prüfungen benutzten Prüfkörperabmessungen sind:

3-Pkt.-Biegeversuch: 80 x 10 x 4 mm$^3$

Zugversuch: Schalterhub Nr. 3 nach DIN 53 455

HDT: 120 x 10 x 4 mm$^3$

Tabelle 1

Eigenschaften verschiedener Bindemittelsysteme nach Härtung von 2 h bei 120 °C

| Eigenschaft | Einheit | Beispiel 1 | Beispiel 2 | Beispiel 3 | Beispiel 4.1 |
|---|---|---|---|---|---|
| Tecam-Gelierungszeit für 250 g bei 23 °C | min | 270 | 400 | 115 | 400 |
| Biegefestigkeit (DIN 53452) | N/mm² | 104 | 88 | 102 | 110 |
| Zugfestigkeit (DIN 53455) | N/mm² | 63,5 | 62,2 | 45,3 | 75 |
| Dehnung (DIN 53455) | % | 3,3 | 2,7 | 1,9 | 3,5 |
| Heat dist. temperature (DIN 53461) | °C | 126 | 120 | 123 | 120 |
| Übergangstemperatur (DIN 53445) | °C | 184 | 159 | 158 | 145 |

EP 0 375 992 B1

Tabelle 2

| HDT-Werte verschiedener Bindemittelsysteme nach Lagerung in kochendem Wasser | | | | | |
|---|---|---|---|---|---|
| | Lagerzeit in kochendem Wasser | | | | |
| | O-Wert | 1 Tag | 2 Tage | 3 Tage | 7 Tage |
| Beispiel 1 | 126 | 115 | 115 | 115 | 115 |
| Beispiel 2 | 113 | 114 | 113 | 113 | 113 |
| Beispiel 3 | 123 | 118 | 118 | 117 | 117 |
| Beispiel 4.1 | 120 | 99 | 84 | 77 | 70 |

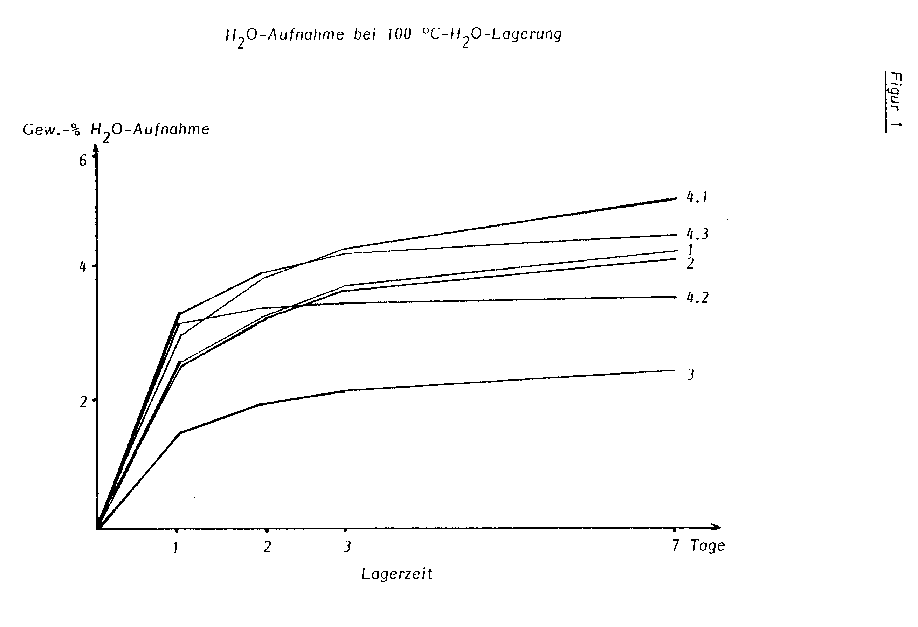

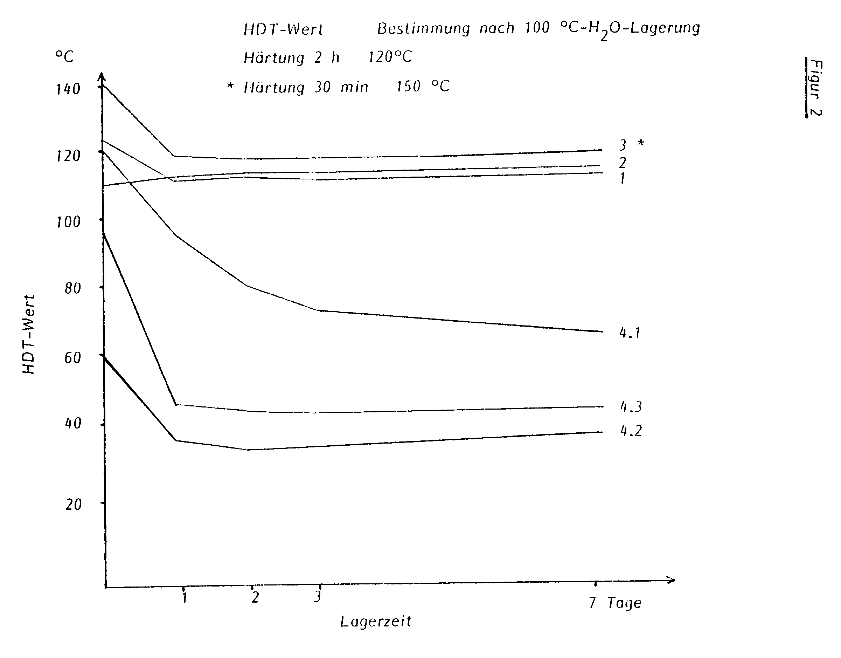

## Patentansprüche

1. Verfahren zur Herstellung von Rohren aus Verbundwerkstoff für Brauch- und Trinkwasser, hergestellt nach dem Wickelverfahren mit Bindemitteln auf Basis von Epoxidharzen, welche im Durchschnitt mehr als eine Epoxidgruppe im Molekül enthalten und Härtungsmitteln für die Epoxidharze unter Mitverwendung von üblichen Hilfs- und Zusatzstoffen, dadurch gekennzeichnet, daß als Bindemittel härtbare Mischungen verwendet werden, welche bestehen aus:

   A) mindestens einem flüssigen Epoxidharz mit Epoxidwerten von 0,4 - 0,6 und

   B) Bis-[1(2'aminoethyl)-1,3-diaza-cyclopenten-2-yl-2]-heptan-1,7 und/oder Bis-[1(2'aminoethyl)-1,3-diazacyclopenten-2-yl-2]-oktan-1,8 und gegebenenfalls

   C) üblichen Füll- und/oder Versteifungsmaterialien, Pigmenten, Farbstoffen, Beschleunigern, Benetz- und Verlaufsmitteln, reaktiven Verdünnern, Härtungsmitteln.

2. Verfahren gemäß Anspruch 1, dadurch gekennzeichnet, daß als flüssiges Epoxidharz gemäß A) Bisphenol A und/oder Bisphenol F mit Epoxidwerten zwischen 0,5 bis 0,55 verwendet wird.

3. Verfahren gemäß den Ansprüchen 1 und 2, dadurch gekennzeichnet, daß das Bindemittel aus den Komponenten A) und B) bei Verarbeitungstemperatur flüssig ist.

4. Verfahren gemäß den Ansprüchen 1 bis 3, dadurch gekennzeichnet, daß als reaktive Verdünner Glycidylether auf Basis von aliphatischen oder alicyclischen Polyolen mit 4 - 8 C-Atomen mitverwendet werden.

## Claims

1. Process for the manufacture of pipes from composite material for industrial and drinking water, manufactured by the winding method with binders based on epoxy resins containing on average more than one epoxy group in the molecule and curing agents for the epoxy resins, with the concomitant use of customary auxiliaries and additives, characterised in that there are used as binders curable mixtures consisting of:

   A) at least one liquid epoxy resin having epoxy values of from 0.4 to 0.6 and

   B) 1,7-bis[1(2'aminoethyl)-1,3-diaza-2-cyclopenten-2-yl]-heptane and/or 1,8-bis[1(2'aminoethyl)-1,3-diaza-2-cyclopenten-2-yl]-octane and, optionally,

   C) customary fillers and/or reinforcing materials, pigments, dyestuffs, accelerators, wetting agents and flow agents, reactive diluents, and curing agents.

2. Process according to claim 1, characterised in that bisphenol A and/or bisphenol F having epoxy values of from 0.5 to 0.55 is/are used as liquid epoxy resin according to A).

3. Process according to claims 1 and 2, characterised in that the binder comprising components A) and B) is liquid at the processing temperature.

4. Process according to claims 1 to 3, characterised in that there are used concomitantly as reactive diluents glycidyl ethers based on aliphatic or alicyclic polyols having 4 to 8 carbon atoms.

**Revendications**

1. Procédé pour fabriquer des tuyaux en matériau composite pour eau industrielle et eau potable, selon la méthode de bobinage avec des liants a base de résines époxydes qui contiennent en moyenne plus d'un groupe époxy dans la molécule et de durcisseurs pour les résines époxydes, avec emploi simultané d'adjuvants et additifs courants, procédé caractérisé en ce qu'on utilise, en tant que liants, des mélanges durcissables constitués :

   A) d'au moins une résine époxyde liquide ayant des indices d'époxyde de 0,4 à 0,6, et

   B) de 1,7-bis[1-(2'-aminoéthyl)-1,3-diaza-cyclopentène-2-yl-2]-heptane et/ou de 1,8-bis[1-(2'-aminoéthyl)-1,3-diaza-cyclopentène-2-yl-2]-octane et, le cas échéant,

   C) de charges et/ou matériaux de renfort, pigments, colorants, accélérateurs, agents mouillants et fluidifiants, diluants réactifs, durcisseurs pris parmi ceux dont on se sert couramment.

2. Procédé selon la revendication 1, caractérisé en ce qu'on utilise, comme résine époxyde liquide selon A), un bisphénol A et/ou un bisphénol F ayant des indices d'époxyde compris entre 0,5 et 0,55.

3. Procédé selon les revendications 1 et 2, caractérisé en ce que le liant dérivant des composants A) et B) est liquide à la température de mise en oeuvre.

4. Procédé selon les revendications 1 à 3, caractérisé en ce qu'on utilise, comme diluants réactifs, des éthers glycidyliques à base de polyols aliphatiques ou alicycliques comportant de 4 à 8 atomes de carbone.

$H_2O$-Aufnahme bei 100 °C-$H_2O$-Lagerung

Gew.-% $H_2O$-Aufnahme

Figur 1

EP 0 375 992 B1

9

Lagerzeit

## Figur 2

HDT-Wert    Bestimmung nach 100 °C-H₂O-Lagerung

Härtung 2 h    120°C

* Härtung 30 min    150 °C